# FASCICULE DE BREVET EUROPEEN

(11) **EP 2 488 833 B1**
(45) Date de publication et mention de la délivrance du brevet: **05.08.2020**
(21) Numéro de dépôt: 10785517.3
(22) Date de dépôt: 11.10.2010
(51) Int. Cl.: G01F 1/05, G01F 25/00, G01P 13/00, G01F 15/00, G01F 15/10

(54) **DISPOSITIF DE DÉTECTION DU BLOCAGE D'UN COMPTEUR MÉCANIQUE DE FLUIDE, ET COMPTEUR MÉCANIQUE DE FLUIDE AVEC DÉTECTION DE BLOCAGE**
VORRICHTUNG ZUR ERKENNUNG EINER BLOCKIERUNG EINES MECHANISCHEN FLUIDZÄHLERS UND MECHANISCHER FLUIDZÄHLER MIT BLOCKIERUNGSERKENNUNG
DEVICE FOR DETECTING BLOCKING OF A MECHANICAL FLOW COUNTER AND MECHANICAL FLOW COUNTER WITH BLOCKING DETECTION

(30) Priorité: 14.10.2009 FR 0904926
(43) Date de publication de la demande: 22.08.2012
(73) Titulaire: SUEZ Groupe, 92040 Paris la Défense Cedex (FR)
(72) Inventeur: BORLÉE, Jean-Paul, 91440 Bures-sur-Yvette (FR)
(74) Mandataire: IPAZ
(86) Numéro de dépôt international: PCT/IB2010/054584
(87) Numéro de publication internationale: WO 2011/045725

(56) Documents cités:
- EP-A2- 1 308 701
- DE-A1-102007 043 814
- DE-C1- 10 225 722
- FR-A1- 2 904 688
- JP-A- 11 142 194
- US-A- 4 495 488

## Description

L'invention est relative à un dispositif de détection du blocage d'un compteur mécanique de fluide, liquide, en particulier compteur d'eau.

L'invention concerne également un compteur mécanique de fluide, liquide, avec détection de blocage, en particulier un compteur d'eau.

Les compteurs d'eau mécaniques, généralement à base de turbines ou de pistons rotatifs, ont aujourd'hui une grande précision métrologique pour un coût raisonnable. Il arrive cependant durant la vie du compteur que les pièces en mouvement se bloquent suite au passage d'une impureté ou d'un corps étranger dans le fluide distribué (grain de sable, fragment de joint, etc...). Pour l'exploitant du réseau de distribution, ceci conduit à une perte nette de facturation car l'abonné continue à consommer de l'eau sans qu'aucun volume ne soit enregistré par le compteur.

Il est difficile, dans l'état de la technique actuel, de faire une distinction entre un compteur bloqué et un usager absent - dans les deux cas le compteur ne comptabilise aucun volume d'eau - même lorsque le compteur est relevé fréquemment, dans le cas d'un système de télérelève par exemple. FR 2 904 688 propose un dispositif de détection d'un blocage de compteur mécanique de fluide, notamment d'un compteur d'eau, qui comprend un transducteur pour détecter la présence d'oscillations du compteur traduisant le fait que le dispositif mécanique mesurant n'est pas bloqué.

Les exploitants, pour résoudre ce problème important de blocage des compteurs mécaniques, sont tentés aujourd'hui de leur substituer des compteurs statiques sans aucune pièce en mouvement - technologie à ultrasons ou électromagnétique. Par principe, ces compteurs ne peuvent se bloquer.

Toutefois, les compteurs statiques sont encore assez coûteux, ce qui en restreint la diffusion seulement auprès de gros consommateurs générant des volumes facturés élevés, et donc aux compteurs de grande capacité (moyens et gros calibres).

En parallèle des compteurs purement statiques, les fabricants de compteurs commencent à proposer des compteurs mécaniques intégrant une partie électronique destinée à des fonctions d'affichage (écran à cristaux liquides) et surtout à des fonctions de télérelève par transmission radio.

L'invention a pour but, surtout, de proposer un dispositif de détection du blocage d'un compteur mécanique de fluide qui permette, pour un coût réduit, d'augmenter la fiabilité des compteurs mécaniques, et de faciliter l'identification de compteurs bloqués en vue de leur remplacement.

Selon l'invention, un dispositif de détection du blocage d'un compteur mécanique de fluide, est caractérisé en ce qu'il comprend :
- des moyens de mesure de la température du fluide au voisinage du compteur et de la température de l'ambiance où se trouve le compteur,
- et des moyens d'analyse pour établir la différence de température (Δθ) entre la température du fluide et la température de l'ambiance, et pour prendre en compte la valeur du débit de fluide fournie par le compteur, ces moyens d'analyse étant programmés pour afficher et/ou émettre une information de compteur bloqué lorsque la différence de température est supérieure à une limite déterminée et que la valeur de débit fournie par le compteur est nulle.

Les moyens d'analyse peuvent être programmés pour afficher et/ou émettre une information de compteur bloqué lorsque la différence de température (Δθ) est supérieure à un seuil prédéfini, en particulier 5° C, et que la valeur de débit fournie par le compteur est nulle.

Le capteur de température du fluide peut être installé en aval ou en amont du compteur, au voisinage de ce compteur, ou directement être intégré dans le compteur.

Le dispositif de détection du blocage peut constituer une unité séparée, rapportée sur un compteur, ou être intégré au compteur.

L'invention est également relative à un compteur mécanique de fluide selon la revendication 4.

Les moyens d'analyse peuvent être programmés pour effectuer un cumul du temps pendant lequel la différence de température (Δθ) dépasse la limite déterminée alors qu'aucun débit n'est indiqué par le compteur, et pour n'émettre une information de compteur bloqué que lorsque le cumul du temps dépasse une valeur prédéterminée.

Avantageusement, le compteur comporte un afficheur sur lequel une mention du type "compteur bloqué" est affichée lorsque le blocage est détecté.

Lorsque le compteur comporte un équipement électronique prévu pour assurer des fonctions de télérelève par transmission radio, l'équipement électronique est de préférence prévu pour transmettre l'information de compteur bloqué à distance.

L'invention concerne plus spécialement un compteur d'eau présentant les caractéristiques définies précédemment.

L'invention consiste, mises à part les dispositions exposées ci-dessus, en un certain nombre d'autres dispositions dont il sera plus explicitement question ci-après à propos d'exemples décrits avec référence aux dessins annexés, mais qui ne sont nullement limitatifs. Sur ces dessins :
Fig. 1 est un schéma d'un dispositif de détection du blocage d'un compteur mécanique de fluide selon l'invention.
Fig. 2 est une vue schématique en élévation d'un compteur mécanique de fluide intégrant un dispositif de détection de blocage selon l'invention.
Fig. 3 est une représentation graphique, en fonction du temps porté en abscisse, d'une variation de débit portée en ordonnée sur l'axe gauche des ordonnées et de la variation de la différence de température entre fluide et température ambiante portée sur l'axe des ordonnées à droite, et
Fig. 4 est une représentation d'une grille de décision pour la détection du blocage.

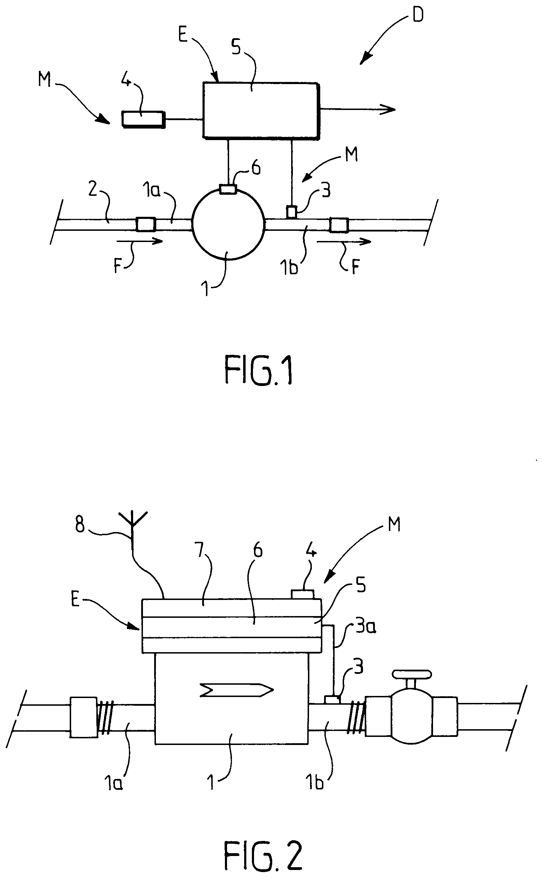

En se reportant à Fig. 1, on peut voir un dispositif D de détection du blocage d'un compteur mécanique 1 de fluide, plus particulièrement un compteur d'eau, installé sur une conduite 2. Le compteur 1 comporte un raccord amont 1a et un raccord aval 1b, le fluide s'écoulant suivant le sens des flèches F de la gauche vers la droite selon Fig. 1.

Le dispositif D comprend des moyens de mesure M de la différence de température entre la température du fluide au voisinage du compteur 1 et la température de l'ambiance où se trouve le compteur. Ces moyens de mesure M comprennent un capteur de température 3 de la température du fluide au voisinage du compteur 1. De préférence, ce capteur 3 est situé immédiatement en aval ou en amont du compteur 1, par exemple sur le raccord 1b, ou dans le corps du compteur lui-même. Un autre capteur de température 4 est prévu pour capter la température de l'ambiance au voisinage du compteur 1, en particulier la température du local dans lequel peut se trouver le compteur.

Les sorties des capteurs 3, 4 sont reliées respectivement à une entrée d'un ensemble électronique E comportant des moyens d'analyse 5 pour déterminer la différence des températures fournies par les capteurs 3 et 4 et pour effectuer une analyse, généralement périodique, de cette différence en tenant compte de la valeur du débit de fluide fournie par le compteur 1. Cette valeur est généralement fournie à l'ensemble E par un transducteur 6 installé sur le compteur.

Le dispositif de détection D peut constituer une unité séparée qui sera installée sur un compteur mécanique non encore équipé d'une partie électronique.

Toutefois, lorsque le compteur mécanique intègre une partie électronique, notamment pour l'affichage ou la télérelève par transmission radio, comme cela devient le cas de plus en plus fréquemment, l'ensemble électronique E se trouve déjà installé sur le compteur 1, avec le transducteur 6 comme illustré sur Fig. 2. En outre, le compteur est généralement équipé d'un émetteur radio 7 avec antenne 8 pour transmettre à distance les informations du débit mesuré. L'ensemble électronique E est adapté, notamment par programmation, pour assurer la fonction des moyens d'analyse 5.

Le capteur 3 de température de fluide peut être installé sur le raccord aval 1b. La sortie du capteur 3 est reliée par un fil conducteur 3a à l'ensemble électronique E. Le capteur de température ambiante 4 peut être installé au-dessus du boîtier de l'émetteur 7 et être relié par un fil conducteur, non visible, à l'ensemble E. La sortie de l'équipement E est reliée à l'émetteur 7 de manière que l'information de compteur bloqué puisse être transmise par radio, par l'antenne 8.

En variante, le capteur de température de fluide pourrait être installé sur le raccord amont 1a, ou dans le corps du compteur lui-même. Plusieurs capteurs de température de fluide, par exemple un capteur amont et un capteur aval pourraient être prévus, de même que plusieurs capteurs de température ambiante afin d'obtenir une moyenne représentative.

L'invention, dans le cas d'un compteur mécanique intégrant une partie électronique comme illustré sur Fig. 2, utilise la capacité de mesure et de calcul de l'électronique déjà embarquée sur le compteur pour détecter le blocage de la partie mobile mesurante.

Il suffit de compléter le compteur avec deux capteurs de température 3, 4 l'un pour mesurer la température du fluide, l'autre la température ambiante et de relier ces capteurs à l'ensemble électronique E comportant un calculateur qui sera programmé pour constituer les moyens d'analyse 5 et estimer la différence de température Δθ entre le fluide et la température ambiante. En associant cette mesure de différence de température Δθ à la mesure de débit effectuée par le calculateur pour réaliser la fonction comptage, il devient possible d'obtenir périodiquement, ou pour des valeurs de débit prédéfinies, des couples de mesure (Δθ, débit).

Le principe de détection repose sur le fait que l'eau distribuée au consommateur final est véhiculée par un réseau de distribution enterré, en général à environ 1 m sous le niveau du sol pour être à l'abri du gel. La température de l'eau est donc proche de 15°C. En fonction de la position du compteur d'eau 1, la température ambiante est différente de la température de l'eau distribuée : en été, pour un compteur installé dans un regard ou dans une maison individuelle, la température ambiante pourra dépasser largement les 20°C. Il est donc fréquent de constater, en fonction des saisons, des écarts de température importants (plusieurs degrés) entre l'eau et l'ambiante lorsque l'eau circule pendant un temps suffisamment long dans le compteur.

En cas de débit nul, l'eau contenue dans le compteur va commencer à se réchauffer sous l'influence de la température ambiante, jusqu'à atteindre la même valeur que la température ambiante au bout d'une durée relativement importante.

En fonctionnement normal, avec écoulement d'eau, la différence de température variera en fonction du débit : il y aura une valeur Δθ significative en cas de débit effectif, et une valeur Δθ faible à nulle en cas de débit nul prolongé.

Si le compteur 1 est bloqué, c'est-à-dire s'il ne fournit aucune valeur de débit mesuré alors même que du liquide s'écoule à travers le compteur, la mesure de débit fournie par le compteur aura systématiquement une valeur nulle, même dans le cas d'un débit réel important. On obtiendra donc dans ce cas une valeur Δθ importante pour un débit nul mesuré prolongé, ce qui est une situation anormale : on peut alors en conclure, à ce moment, sans équivoque, que le compteur 1 est bloqué.

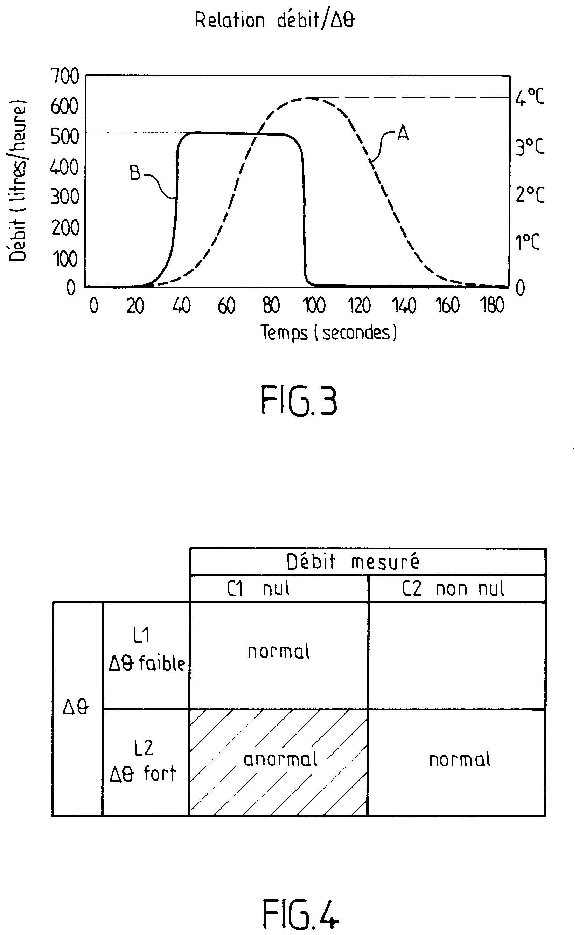

Fig. 3 illustre la variation de la différence de température Δθ représentée par la courbe A en tirets, les valeurs de Δθ exprimées en °C étant portées sur l'axe des ordonnées situé à droite de la figure. Le temps est porté en abscisse et exprimé en secondes. Le débit réel est représenté par la courbe B en trait plein et les valeurs de débit sont portées sur l'axe des ordonnées situé à gauche et exprimées en litres/heure ou L/h.

Dans l'exemple représenté, le débit est nul jusque vers l'instant 20 s. En conséquence, la valeur Δθ (différence entre la température ambiante et la température du fluide) est nulle. Vers l'instant 20 s, le débit augmente brusquement pour passer à la valeur de 500 L/h. La différence de température Δθ augmente, avec un certain retard, pour atteindre la valeur de 4°C. Lorsque le débit est coupé vers l'instant 100 s et reste coupé, la valeur de Δθ redescend jusqu'à la valeur nulle atteinte vers l'instant 170 s.

Cette diminution de la différence Δθ, lorsqu'elle est détectée et qu'aucun débit n'est indiqué par le compteur, constitue une alerte indiquant que le compteur est bloqué ou défaillant. Avant d'intervenir, on peut s'assurer que les alertes se répètent et fixer par exemple un nombre minimum d'alertes sur une période déterminée avant d'intervenir. On peut également effectuer un cumul du temps pendant lequel Δθ dépasse la limite déterminée, alors qu'aucun débit n'est indiqué par le compteur.

Pour un compteur d'eau chaude, le fonctionnement est similaire, mais les valeurs sont inversées : la température du fluide est supérieure à la température ambiante en cas de débit effectif. Δθ correspond à la différence entre la température du fluide et celle de la température ambiante. Mais le principe de détection de blocage du compteur reste le même : si Δθ est important, et si le débit mesuré fourni par le compteur est nul, on en déduit que le compteur est bloqué.

Fig. 4 résume la grille de décision pour la détection du blocage et illustre l'algorithme de détection de blocage introduit dans les moyens d'analyse 5 de l'ensemble électronique E.

Sur Fig. 4 un tableau à deux lignes et deux colonnes est tracé. La ligne L1 correspond à une différence de température Δθ faible, par exemple inférieure à 1°C tandis que la ligne L2 correspond à un Δθ important, par exemple supérieur à 5°C. La colonne C1 correspond à un débit mesuré par le compteur de valeur nulle tandis que la colonne C2 correspond à un débit non nul, par exemple supérieur à 10 L/h.

Les cases L1C1 et L2C2 correspondent à un fonctionnement normal ne provoquant pas de déclenchement d'alerte.

La case L2C1 correspond à un fonctionnement anormal et produit une alerte de compteur bloqué.

La case L1C2 correspond à un cas indéterminé ne déclenchant pas d'alerte. Le faible écart de température alors que le débit n'est pas nul résulte d'une faible différence entre la température ambiante et la température du fluide.

L'algorithme de détection de blocage prendra en compte le fait que les phénomènes de variation des températures sont lents et qu'il faudra attendre des périodes de stabilisation pour que les mesures soient réellement utilisables.

Certaines périodes de l'année seront plus propices à la détection efficace des compteurs bloqués, en particulier les saisons de températures extrêmes (été, hiver) qui permettent d'engendrer des écarts de température importants entre le fluide et la température ambiante.

L'alarme "compteur bloqué" pourra être reportée sur l'afficheur du compteur 1.

De plus si le compteur est équipé d'un système de télérelève, une alarme pourra être transmise par l'antenne 8 pour avertir l'exploitant immédiatement après l'apparition du défaut, ce qui permettra de déclencher rapidement un changement de compteur, réduisant par voie de conséquence la quantité d'eau distribuée sans facturation associée.

## Revendications

1. Dispositif de détection du blocage d'un compteur mécanique de liquide, en particulier compteur d'eau, **caractérisé en ce qu'**il comprend :
- des moyens de mesure (M) de la température du fluide au voisinage du compteur et de la température de l'ambiance où se trouve le compteur,
- et des moyens d'analyse (5) pour établir la différence de température (Δθ) entre la température du fluide et la température de l'ambiance, et pour prendre en compte la valeur du débit de fluide fournie par le compteur, ces moyens d'analyse étant programmés pour afficher et/ou émettre une information de compteur bloqué lorsque la différence de température (Δθ) est supérieure à une limite déterminée et que la valeur de débit fournie par le compteur est nulle.

2. Dispositif selon la revendication 1, **caractérisé en ce que** les moyens d'analyse sont programmés pour afficher et/ou émettre une information de compteur bloqué lorsque la différence de température (Δθ) est supérieure à un seuil prédéfini, de 5° C, et que la valeur de débit fournie par le compteur est nulle.

3. Dispositif selon l'une quelconque des revendications 1 et 2, **caractérisé en ce que** les moyens de mesure (M) comprennent un capteur (3) de température du fluide installé en aval ou en amont du compteur (1), au voisinage de ce compteur ou directement intégré dans le compteur.

4. Compteur mécanique de fluide, liquide ou gaz, comportant un équipement électronique (E) avec moyens de comptage, et généralement d'affichage, de la consommation, **caractérisé en ce qu'**il comprend
- un dispositif selon l'une quelconque des revendications 1 à 3 dans lequel les moyens de mesure (M) comprennent un :au moins un capteur (3) de température du fluide au voisinage du compteur et au moins un capteur (4) de température de l'ambiance où est installé le compteur ; et
- un moyen de liaison entre les capteurs de température (3, 4) et l'équipement électronique (E).

5. Compteur selon la revendication 4, **caractérisé en ce que** les moyens d'analyse (5) sont programmés pour effectuer un cumul du temps pendant lequel la différence de température (Δθ) dépasse la limite déterminée alors qu'aucun débit n'est indiqué par le compteur, et pour n'émettre une information de compteur bloqué que lorsque le cumul du temps dépasse une valeur prédéterminée.

6. Compteur selon l'une des revendications 4 et 5, dont l'équipement électronique est prévu pour assurer des fonctions de télérelève par transmission radio, **caractérisé en ce que** l'équipement électronique est prévu pour transmettre l'information de compteur bloqué à distance.

7. Compteur selon l'une quelconque des revendications 4 à 6, **caractérisé en ce que** le fluide est de l'eau.

## Patentansprüche

1. Vorrichtung zur Erkennung einer Blockierung eines mechanischen Flüssigkeitszählers, insbesondere eines Wasserzählers, **dadurch gekennzeichnet, dass** sie aufweist:
- Einrichtungen (M) zum Messen der Temperatur des Fluids nahe dem Zähler und der Temperatur der Umgebung, in welcher sich der Zähler befindet,
- und Analyseeinrichtungen (5) zum Feststellen der Temperaturdifferenz (Δθ) zwischen der Temperatur des Fluids und der Temperatur der Umgebung und zur Berücksichtigung des von dem Zähler gelieferten Durchflusswerts, wobei die Analyseeinrichtungen derart programmiert sind, dass sie Informationen eines blockierten Zählers anzeigen und/oder senden, wenn die Temperaturdifferenz (Δθ) größer als ein bestimmter Grenzwert ist und der vom Zähler gelieferte Durchflusswert Null ist.

2. Vorrichtung nach Anspruch 1, **dadurch gekennzeichnet, dass** die Analyseeinrichtungen derart programmiert sind, dass sie Informationen des blockierten Zählers anzeigen und/oder senden, wenn die Temperaturdifferenz (Δθ) größer als ein vordefinierter Schwellenwert von 5°C ist und der vom Zähler gelieferte Durchflusswert Null ist.

3. Vorrichtung nach einem der Ansprüche 1 und 2, **dadurch gekennzeichnet, dass** die Messeinrichtungen (M) einen Fluidtemperatursensor (3) aufweisen, der stromabwärts oder stromaufwärts des Zählers (1) in der Nähe des Zählers eingebaut ist oder unmittelbar in dem Zähler integriert ist.

4. Mechanischer Fluid-, Flüssigkeits- oder Gaszähler mit einem elektronischen Gerät (E) mit Einrichtungen zum Zählen, allgemein zum Anzeigen, des Verbrauchs, **gekennzeichnet dadurch, dass** er aufweist:
- eine Vorrichtung nach einem der Ansprüche 1 bis 3, wobei die Messeinrichtungen (M) mindestens einen Flüssigkeitstemperatursensor (3) in der Nähe des Zählers und mindestens einen Sensor (4) für die Temperatur der Umgebung, in welcher der Zähler eingebaut ist, aufweisen; und
- eine Verbindungseinrichtung zwischen den Temperatursensoren (3, 4) und dem elektronischen Gerät (E).

5. Zähler nach Anspruch 4, **dadurch gekennzeichnet, dass** die Analyseeinrichtungen (5) derart programmiert sind, dass sie eine Kumulation der Zeit durchführen, während welcher die Temperaturdifferenz (Δθ) den bestimmten Grenzwert überschreitet, obwohl der Zähler keinen Durchfluss anzeigt, und Informationen des blockierten Zählers nur senden, wenn die kumulierte Zeit einen vorbestimmten Wert überschreitet.

6. Zähler nach einem der Ansprüche 4 und 5, dessen elektronisches Gerät zur Gewährleistung von Fernablesefunktionen durch Funkübertragung vorgesehen ist, **dadurch gekennzeichnet, dass** das elektronische Gerät zur Fernübertragung der Informationen des blockierten Zählers vorgesehen ist.

7. Zähler nach einem der Ansprüche 4 bis 6, **dadurch gekennzeichnet, dass** das Fluid Wasser ist.

## Claims

1. A device for detecting the blockage of a mechanical liquid meter, in particular a water meter, **characterized in that** it comprises:
- measuring means (M) for measuring the temperature of the fluid in the vicinity of the meter and of the temperature of the surroundings where the meter is,
- and analysis means (5) for establishing the temperature difference (Δθ) between the temperature of the fluid and the temperature of the surroundings, and for taking into account the value of the fluid flow rate supplied by the meter, these analysis means being programmed in order to display and/or transmit a meter-blocked item of information when the temperature difference (Δθ) is greater than a determined limit and when the flow-rate value supplied by the meter is zero.

2. The device according to claim 1, **characterized in that** the analysis means are programmed to display and/or transmit a meter-blocked item of information when the temperature difference (Δθ) is greater than a predefined threshold, of 5°C, and when the flow-rate value supplied by the meter is zero.

3. The device according to claim 1 and 2, **characterized in that** the measuring means (M) comprise a temperature sensor (3) for sensing the temperature of the fluid installed downstream or upstream of the meter (1), in the vicinity of this meter or directly incorporated into the meter.

4. A mechanical meter for metering fluid, liquid or gas, comprising an item of electronic equipment (E) with means for metering, and usually for displaying, consumption, **characterized in that** it comprises:
- one device according to any one of claims 1 to 3, wherein measuring means (M) comprise at least one sensor (3) for sensing the temperature of the fluid in the vicinity of the meter and at least one sensor (4) for sensing the temperature of the surroundings in which the meter is installed; and
- a means for connection between the temperature sensors (3, 4) and the item of electronic equipment (E).

5. The meter according to claim 4, **characterized in that** the analysis means (5) are programmed to total the time during which the temperature difference (Δθ) exceeds the determined limit when no flow rate is indicated by the meter, and to transmit a meter-blocked item of information only when the total time exceeds a predetermined value.

6. The meter according to claim 4 and 5, wherein the item of electronic equipment is designed to carry out remote meter reading functions by radio transmission, **characterized in that** the item of electronic equipment is designed to transmit the meter-blocked item of information remotely.

7. The meter as claimed in any one of claims 4 to 6, **characterized in that** the fluid is water.
